# EUROPEAN PATENT SPECIFICATION

(11) **EP 2 450 604 B1**
(45) Date of publication and mention of the grant of the patent: **12.12.2012**
(21) Application number: 11183187.1
(22) Date of filing: 28.09.2011
(51) Int. Cl.: F16K 3/26, F16K 11/22, F16K 31/04

(54) **Thermostatic mixer group for bathroom or kitchen**
Thermostatische Mischbatterie für Küche oder Badezimmer
Mitigeur thermostatique pour salle de bain ou cuisine

(30) Priority: 09.11.2010 EP 10190552
(43) Date of publication of application: 09.05.2012
(73) Proprietor: Nobili, Fabrizio, 6534 San Vittore (CH)
(72) Inventor: Nobili, Fabrizio, 6534 San Vittore (CH)
(74) Representative: Zardi, Marco

(56) References cited:
- FR-A- 1 586 509
- FR-A1- 2 463 343
- US-A- 4 653 535
- US-A1- 2001 013 553
- US-A1- 2009 148 268

## Description

### Field of application

The present invention refers to a thermostatic mixer group for bathroom or kitchen comprising electronic water flow adjustment means. In particular, the present invention refers to a mixer group of the aforementioned type in which it is also possible to control the temperature of the water. Even more in particular, the invention refers to a mixer group for controlling electronically the flow rate and the temperature with much more precision than manual control.

### Prior art

Thermostatic mixer groups for bathroom or kitchen are known that allow an electronic adjustment of the flow rate and of the water temperature, see for example US 2009/0148268.

Such mixer groups comprise hot and cold water inlets, an outlet of mixed water, a pair of valves situated downstream of the respective inlets, motorised means for actuating the respective valves, electrically driven by an electronic card that is inserted in a hydraulically insulated seat of the mixer group itself. The mixer group is for example recessed in a seat inside the wall and behind a shower panel and the adjustment of the flow rate is carried out through a keypad mounted, for example, on the shower panel itself or directly on the diffuser jet and electrically connected to the electronic card of the mixer group.

Such mixer groups make it possible to have an electronic control of the flow rate and of the temperature that is much more precise than a manual control and that are aesthetically more pleasing, due to the fact that the keypad can be adapted to upper end bathrooms. Indeed, the control keypad can be left visible on the sink plane or it can be mounted on the diffuser jet.

However, the aforementioned mixer groups suffer from some limitations, mainly associated with their dimensions, and from some drawbacks relative to their maintenance requirements and to their operation.

As far as the dimensions are concerned, the coupling of the electric motors and of the valves is rather bulky, since that the electric motors are each equipped with their own rotation shaft fixedly attached to a corresponding gear which engages with a second gear mounted on a stem of the respective valve. In order to allow each electric motor to precisely adjust the opening of the relative valve, it is foreseen for there to be a transmission or reduction ratio between the gears, obtained by using a first gear for the electric motor and a second gear for the valve having a different diameter; such gears have a considerable bulk.

Moreover, in known mixer groups, seats are foreseen for receiving the valves that are in fluid communication with the inlets, to receive water. Such valves are big and contain discs made from ceramic for intercepting fluid, which are able to adjust the flow rate of the water according to the angular movement of their stem and have dimensions of about 3 cm diameter and a length of about 5 cm, including the length of the gear that projects from the body of the valve to be engaged by the gear of the electric motor.

Due to the aforementioned arrangement of the motors, of the valves, of the reduction gears and of the electronic card, as well as to the dimensions of the valves, of the motors and of the gears themselves, the mixer group is rather bulky and a recess of a relevant size must be provided in the wall to receive it. Indeed, the mixer group is not adapted to be mounted outside the wall, since it is cumbersome and aesthetically not appreciated. A known mixer group of the type described above has a size of 420 × 177 × 68 mm and thus requires a seat in the wall of at least 70 mm in depth, 420 mm wide and 68 mm height.

On the other hand, it has been found that the gears of the motor and of the valves undergo wearing that tends to alter the adjustment precision of the mixer group, unless periodic and onerous maintenance operations are carried out. The maintenance foresee to operate on the mixer group, i.e. extracting it from its housing in the wall, accessing the mechanical components, substantially removing a cover of the mixer group, cleaning and oiling the gears, as well as checking the correct position of the valves and the operation of the electric motors. This is not practical, since the shower panel mounted on the wall must be removed to access to the seat of the mixer group.

Of course, the mixer group can be installed in view, for example on the sink plane or at the edge of the tub or enclosed by a plug or door over the wall, but in such a case it has an undesired bulk and, in any case, it is not very nice to look at. Furthermore, in known mixer groups, it has been verified that the electronic adjustment of the valves is rather noisy, due to the movement of the gears, and generates an annoying whistling noise, probably due to the flow of water inside the ceramic valves, which in some cases prevents it from being used in homes.

At last, the mixer groups does not provide a precise regulation or maintenance of a certain temperature in case the pressure through the cold and hot inlets is different, even if slightly different, due to defects in the hydraulic plant, especially in great buildings, for instance in the hotels, wherein the aperture or variation of water flow in a shower or sink of an apartment may involve the provision of water in other apartments.

The problem at the basis of the present invention is that of conceiving a mixer group for bathroom or kitchen with very small dimensions, suitable for being inserted in a small area behind the shower panel or beneath the sink or wash basin, without having an annoying bulk, whilst still being equipped with mechanical means for actuating the valves that are capable of adjusting the temperature and the flow rate in a particularly precise manner, also in great buildings wherein the provision of water may change, without requiring substantial maintenance interventions over time and that is very silent. Another purpose of the invention is that of making it unnecessary to extract the mixer group once it has been installed, substantially overcoming the limitations and the drawbacks that still affect mixer groups according to the prior art.

### Summary of the invention

The idea of solution at basis of the present invention is that of using one hot water inlet and one cold water inlet as the axial sliding seats of a respective valve comprising a hollow cylinder, actuated by a respective spindle of an electric motor, sliding in the inlet, and control means to actuate the hollow cylinders in order to precisely maintain the temperature of said mixed water at a value preset by a user. The inlets are connected to respective outlets of a pressure balance, this last also forming a fitting with tubes for supplying hot and cold water from an hydraulic plant or system. Advantageously, the size of the mixer group is considerably small, since the inlets, which also acts as fittings with the pressure balance outlets is also used as a sliding seat for the valve and the pressure balance is used as a fitting with the tubes supplying water from the plant.

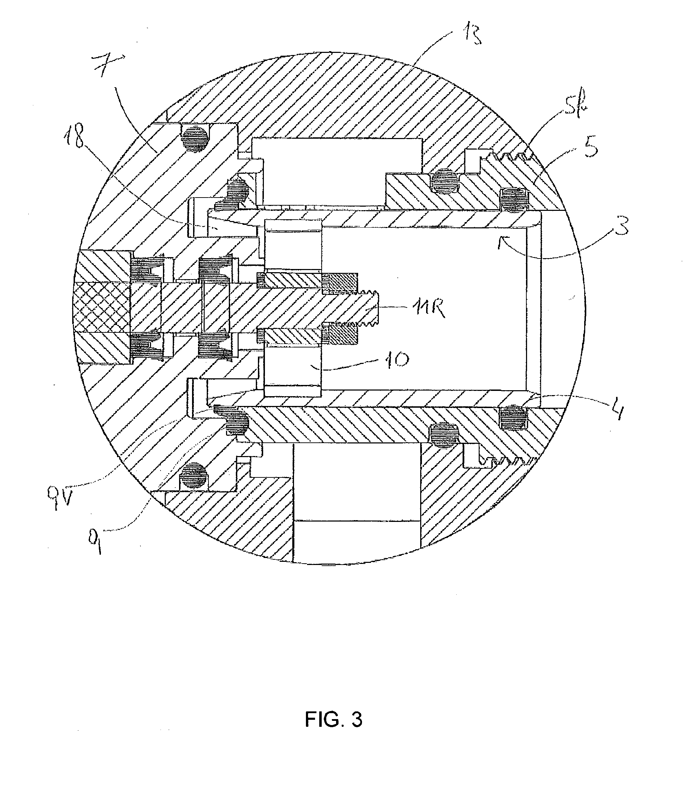

The electric motors are continuously driven for maintaining the temperature of the mixed water at a predetermined value, set by the user, adjusting and compensating even minor changes, for example due to variation of the pressure of the hot and cold water in input to the mixer group. Advantageously, the maintenance of the present value of the temperature is not associated to an element sensing the temperature variation as a dilatation or constriction but thorough a constant measure of the temperature and a continuous and precise adjustment of the valves. Further provisions, which shall become clearer in the rest of the description, combine to considerably reduce the dimensions of the mixer group. Advantageously, the arrangement of the hollow cylinder and of the inlet, which is obtained with a tubular body coaxial to the hollow cylinder, reduces the impact of the water on the valve, considerably decreasing the noise of the mixer group but also decreasing the energy necessary in order to actuate the valve. In particular, as shall become clear from the following description, the pressure exerted by the water in inlet on the valve (from right to left in figure 3) is mostly balanced by the pressure of water already present in the mixer (from left to right in figure 3); in such a way, it is possible to use electric motors with limited power and dimensions to actuate the hollow cylinder.

Substantially, the hollow cylinder acts as a gate valve with respect to a radial outlet situated on the tubular body, adjusting the outlet flow. The closure is carried out through an elastically deformable gasket, interposed between the tubular body and a lid thereof, opposite the inlet of the water, and that forms an extension of the sliding seat of the hollow cylinder; in particular, the gasket is equipped with a tab or tongue that projects towards the extension of the sliding seat.

The operation is as follows: when the hollow cylinder closes the radial outlet like a gate valve but without involving the extension of the sliding seat, a small amount of water flows between the tubular body and the hollow cylinder, allowing a very precise adjustment of the water; when the hollow cylinder is positioned in such an extension, it deforms the gasket against the tubular body and carries out the closure.

Preferably, the tab has an inclination of 45° towards the extension of the sliding seat. This configuration is particularly advantageous since, when the hollow cylinder deforms the gasket against the tubular body, the inclination of the tab reduces, for example to 20°, which does not adhere completely to the tubular body, making it possible for the water present in the lid to exert a pressure behind the tab, i.e. between the tubular body and the tab, which compresses the latter towards the cylindrical body, increasing its seal.

Such a gasket has the double function of forming a seal between the lid and the tubular body, in any operation condition, and to form a seal between the tubular body and the hollow cylinder, when the latter is retracted in the extension of the sliding seat.

Moreover, the mechanical members suitable for adjusting the flow, i.e. the hollow cylinder and the motors, do not undergo substantial wearing since the closure of the flow is carried out through deformation of the gasket against the tubular body. In particular, the gasket is not operatively associated with the radial outlet to carry out the closure on it, like in common valves, which would cause abrasion of the gasket against the radial outlet, but it is associated with the cylindrical surface of the hollow cylinder, and therefore does not undergo abrasions. In particular, the tab of the gasket is elastically deformed between the cylindrical surface of the hollow cylinder and the cylindrical surface of the tubular body, between which there is preferably a distance of 0.75 mm; in such a case the thickness of the tab is of between 14 mm (base of the tab) and 13.5 mm (end of the tab).

This solution avoids the requirement of maintenance operations on the mixer group, for the replacement of the gasket or the servicing of complex gears, and at the same time achieves an adjustment of the flow with uncommon precision. Indeed, during the dispensing, the gasket substantially remains stretched out inside the lid, and free from any contact with other structural parts of the mixer that would cause possible abrasions to it. Moreover, the pressure balance provides a same flow of cold and hot water towards the respective inlets of the valve.

Advantageously, the size of the mixer group is very small even in the case of adjusting hot and cold water from respective inlets, since respective valves are coupled with the electric motors through spindles, parallel to one another, and without using reduction gears for each motor.

Based upon such a solution, the technical problem at the basis of the present invention is solved with a mixer group for bathroom or kitchen comprising two valves, each valve comprising a hollow cylinder, a tubular body that forms a sliding seat of the hollow cylinder and comprises an axial inlet and at least one radial outlet for the water, and an electric motor for actuating the hollow cylinder, the mixer group comprising a lid for the end opposite the inlet of the tubular body, defining an extension of the sliding seat, and an annular gasket between the tubular body and lid, comprising an elastically deformable tab that projects in the extension of the seat, in open flow conditions, or is deformed against the hollow cylinder, for closing the flow.

According to one aspect of the present invention, the lid comprises a through hole for the sliding of a shaft of the electric motor and an operative end with a small diameter of the shaft is coupled with a perforated disc, preferably comprising a filter for the water, which engages a thickness of the hollow cylinder. Advantageously, the water filter is compacted inside the valve body formed by the hollow cylinder and by the tubular body, further limiting the dimensions of the mixer group.

According to a preferred embodiment, the perforated disc is made from plastic material, preferably POM, and is coupled at the end with predetermined axial clearance, preferably of 0.02 mm, and predetermined radial clearance, preferably of 0.3 mm. Advantageously, the applicant has observed that the axial clearance and the radial clearance mentioned above prevent the flow of water from generating an annoying noise or whistling sound found in some prototypes in which the perforated disc was substantially fixed on the motor spindle.

According to preferred embodiments, the extension of the sliding seat has a length of 3 mm; the tab has a thickness, when resting, of 0.5 mm and an inclination, when resting, of 45°. Such a structure of the lid and of the tongue allow an adjustment of the flow with unusual precision, i.e. of amounts of water of between 40 and 30.000 ml/min that flow when the gasket is not deformed while closed against the hollow cylinder. These embodiments give the mixer group an excellent capability of dosing the water, for example for filling small containers or phials.

According to another aspect of the present invention, the mixer group comprises a single-body having opposite seats for fixing the lid and the tubular body, and a water outlet in fluid communication with the radial outlet. The applicant has observed that it is advantageous to manufacture the lid and the tubular body separately from the single-body to facilitate the positioning of the elastically deformable gasket and so as to reduce the manufacturing costs.

According to a preferred embodiment, a portion of the inlet projects from the seat of the single-body and forms threaded mounts for fitting respective flexible tubes for supplying hot or cold water; the hollow cylinder is suitable for being at least partially operative projecting from the axial inlet in the flexible tube. In such a way, the dimensions of the mixer group are even smaller, since also the space inside the supply tubes is exploited for the sliding of the hollow cylinder, in particular for opening the flow to its maximum.

Preferably, the tubular body has a cross section, of about 8 mm, and the electric motor generates power which is at least sufficient to move the hollow cylinder under mains pressure comprised between 0 bar and 15 bar, preferably a power comprised between 40 Newton and 100 Newton. The inlet of the water has an inner diameter of about 14 mm and the hollow cylinder has a section of 13.9 mm.

Thus, the mixer group comprises a first and second electric motor for actuating a first and second hollow cylinder, able to slide in a first and a second tubular body, the electric motors being suitable for the adjustment, respectively, of cold and hot water entering in the respective axial inlets, flowing together in a mixing chamber of the mixer group, which is in fluid communication with the radial outlets of the tubular bodies. The mixing chamber is centrally arranged between the valves, i.e. between axes of the respective hollow cylinder and tubular bodies, and it is in fluid communication with a tubular outlet, also this last being centred among the valve.

In particular, the electric motors are linear actuation electric motors, situated outside the single-body, hydraulically insulated from the mixing chamber and configured to reduce the interaxial distance between the respective spindles, preferably at a distance which is less than or equal to 50 mm. The applicant as experimented that this distance may be further reduced to 30 mm, changing the arrangement of the tubular outlet, i.e. placing it radially and not centrally between the valves. The fact that there are no reduction gears, i.e. the use of a gate valve and of the claimed gasket, makes it possible to solve the technical problem of reducing the dimensions of the mixer, by bringing the two electric motors much closer to one another.

Another single-body is provided which delimits inlets for hot and cold water from flexible supplying tubes, outlets of hot and cold water with balanced pressure, and a through hole, perpendicular to the inlets and outlets, forming a seat for the pressure balancer. The pressure balance has a hollow cylinder delimiting windows for the passage of hot and cold water and whose apertures is regulated by a piston sliding in the hollow cylinder.

The counter posed apertures of the through hole are closed with respective lids defining a limit switch for the piston and also defining a seat for the hollow cylinder.

A substantially boxed body made from insulating material encloses the body of the valves, the valves themselves, the body of the pressure balancer and the pressure balancer, as well as the electric motors, the boxed body being equipped with a face having respective openings for the inlets of hot and cold waters supplied from the flexible tube, an opposite face equipped with a respective opening for the outlet of mixer water, a lateral face associated to a respective double bottom between which an electronic card is arranged for driving the electric motors, and a removable cover, associated with a face, delimiting an hydraulically insulated seat within the mixer group. The boxed body is an external enclosure enclosing all the electronic, mechanic and hydraulic means of the mixer group.

The face comprises at least one hole for receiving electrical connections for powering the electronic card and electric motors, and a wired connection towards a keypad to be preferably installed on a shower panel. In an aspect of the invention, the electronic card includes a radio transmitter programmed to communicate wirelessly with a remote control device, preferably a mobile phone, an I-pod, an I-phone or the like, for driving remotely the mixer group.

According to the special arrangement described above, the boxed body has dimensions which are smaller than or equal to 35mm × 130mm × 155mm.

The mixer group according to the invention solves the technical problem since the valves are operatively inside the inlets and are mounted directly on the spindles of the respective electric motors, which are side by side and very close to each other, preferably at an interaxial distance that is shorter than or equal to 50mm, and do not have reduction gears.

The increase and the reduction of the flow rate is carried out through the sliding of the hollow cylinder of the tubular body, respectively increasing or decreasing the port for the water to pass through the radial outlet, and the closure is carried out through the sliding of the hollow cylinder in the extension of such a seat and the deformation of the tab of the gasket against it. In other words, during the closure, the tab does not project in the seat but is squashed against the hollow cylinder; advantageously, in such a position, the water present in the seat compresses the tab against the hollow cylinder, substantially acting upon the surface of the tab which is not in contact with the hollow cylinder, thus increasing the sealing of the gasket and improving the closure. In particular, when the hollow cylinder engages with the extension of the sliding seat, the flow is closed.

Further characteristics and advantages of the present invention shall become clearer from one of its embodiments given only as an example and not for limiting purposes with reference to the attached drawings.

### Brief description of the drawings

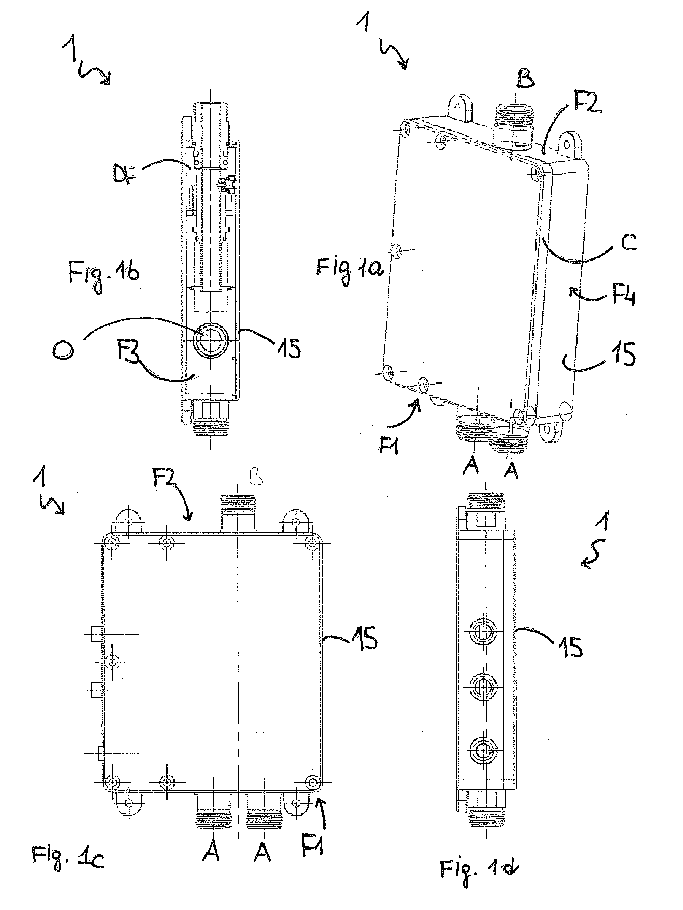

Figure 1a is a perspective view of a mixer group according to the present invention;
figure 1b is a lateral and sectional view of the mixer according to figure 1 a;
figure 1c is a front view of the mixer according to figure 1;
figure 1d is a lateral view of the mixer according to figure 1;

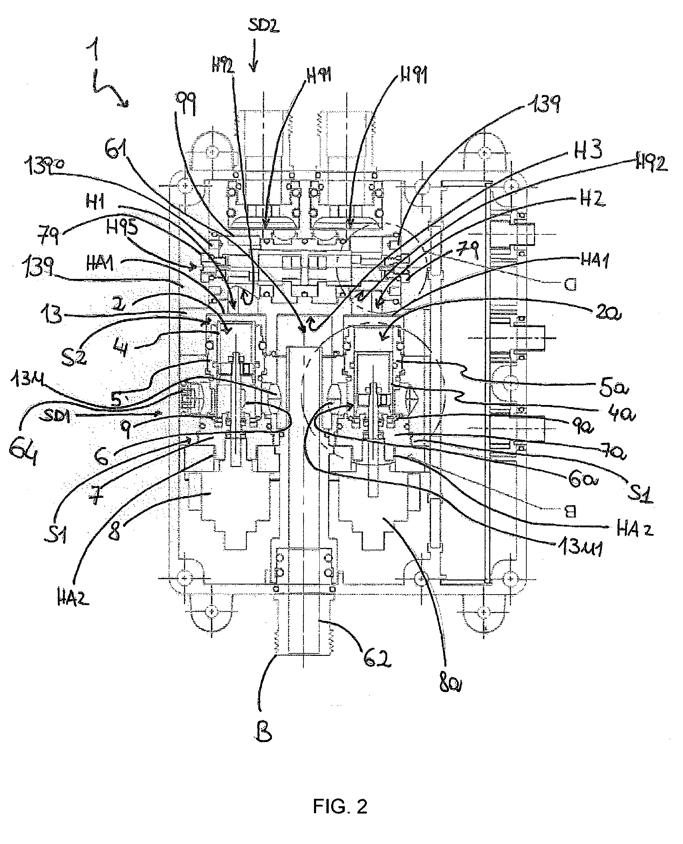

figure 2 is a section view of the mixer of figure 1 c;
figure 3 is a detail of the section of figure 2;
figure 4 is another detail of the section of figure 2;

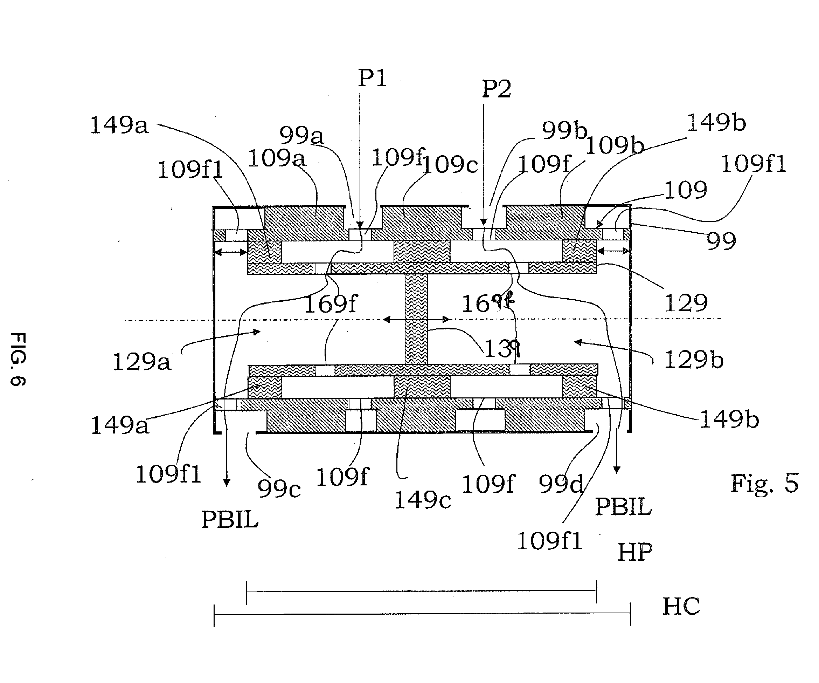

figure 5 is another section view of the mixer of figure 1c; figure 6 is a schematic representation of a pressure balancer of the mixer group of figure 2;

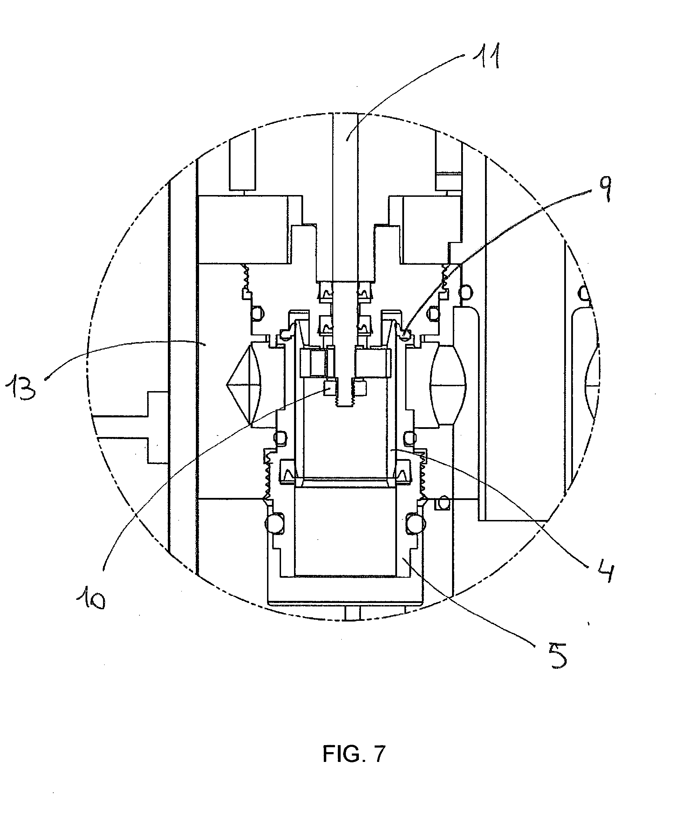

figure 7 is another detail of the section of figure 2;

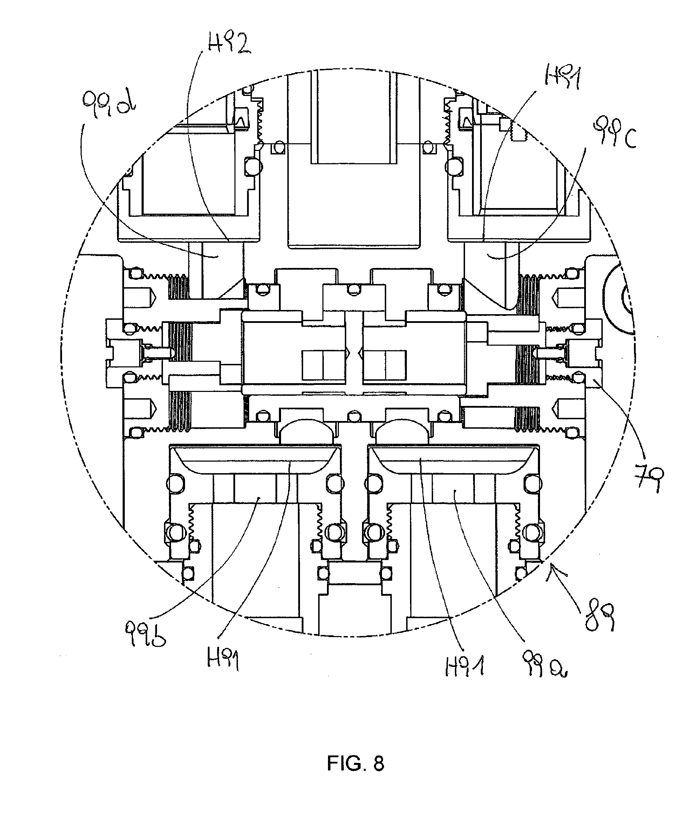

figure 8 is a further detail of the section of figure 2.

### Detailed description

With reference to the figures, a thermostatic mixer group 1 for bathroom or kitchen according to the present invention is represented with reference numeral 1. The mixer group 1 comprises two valves 3, 3a, each comprising a hollow cylinder 4, 4a, a tubular body 5, 5a that forms a sliding seat of the hollow cylinder and comprises an axial inlet 2, 2a and at least one radial outlet 6, 6a for the water, and an electric motor 8, 8a for actuating the hollow cylinder 4, 4a. The mixer group also comprises a lid 7, 7a for the end opposite the inlet 2, 2a of the water in the tubular body 5, 5a, defining an extension of the sliding seat for the hollow cylinder 4, 4a, and an annular gasket 9, 9a between the tubular body 5, 5a and lid 7, 7a, comprising an elastically deformable tab 9v that projects in the extension of the seat, in open flow conditions, or deformed against the hollow cylinder 4, 4a, for closing the flow (figure 3).

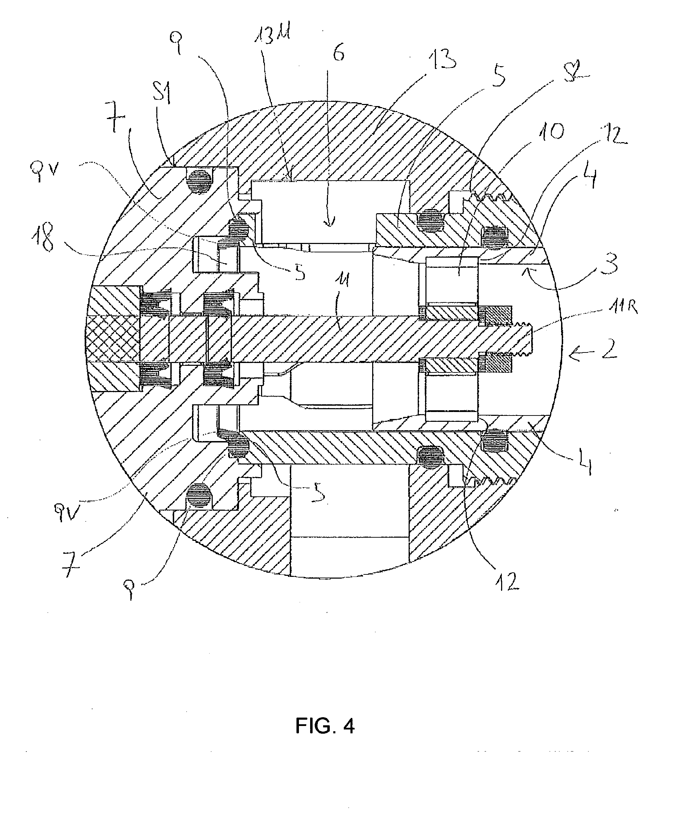

The lid 7, 7a comprises a through hole for the sliding of a shaft 11, 11a of the electric motor and an operative end with a small diameter 11R1, 11R of the shaft is coupled with a perforated disc 10, 10a, preferably comprising a water filter, which engages a thickness of the hollow cylinder (figure 4). Advantageously, the water filter is compacted inside the body of the valve 3, 3a formed by the hollow cylinder 4, 4a and by the tubular body 5, 5a, further limiting the dimensions of the mixer group. The perforated disc is made from plastic material and is coupled with the end of the spindle 11, 11a with a predetermined axial clearance. Such a radial and/or axial clearance prevents the water flow from generating an annoying noise or whistling sound found in some prototypes in which the perforated disc was rigidly fixed onto the motor spindle 11R, 11R1.

The extension of the sliding seat formed by the lid 7, 7a has a length of about 3 mm; the tab has a thickness, when resting, of about 0.5 mm and an inclination, when resting, of about 45°.

The mixer group comprises a body 13 having opposite fixing seats S1, S2 of the lid 7, 7a and of the tubular body 5, 5a, and a water outlet 13u, 13u1 in fluid communication with the radial outlet 6, 6a. The applicant has observed that it is advantageous to manufacture the lid 7, 7a and the tubular body 5, 5a separately from the body so as to allow the positioning of the elastically deformable gasket 9, 9A and so as to reduce the manufacturing costs.

The body 13 is manufactured starting from a plastic single-body, substantially parallelepiped, which is drilled axially from a first side SD1 to delimit the water outlets 13u, 13u1, which are in fluid communication with the radial outlets 6, 6a of the tubular bodies 5, 5a, and is drilled from another side SD2, perpendicular to the first side SD1, to delimit two parallel and through holes H1, H2 forming, through apertures HA1, HA1, the seats S2 for the tubular bodies 5, 5a and inlets for water, and through the counter posed aperture HA2, HA2 the seats S1 for the lid 7, 7a and connections for the electric motors 8, 8a.

A blind hole H3 is also formed between the parallel and through holes H1, H2, parallel to these last and in fluid communication with them through a mixing chamber 61, associated to the bottom of the hole H3; a tube 62, of reduced diameter with respect to the hole H3, is inserted in predetermined length in such hole H3, thus delimiting a fluid path for the hot and cold water that is parallel and external to the tube 62, from the outlets 13u, 13u1 to the mixing chamber 61, and then inside the tube 62, towards an outlet B of mixed water.

The body 13 is in plastic material, since plastic does not influence the measurement and regulation of water temperature. In one embodiment of the invention, the axial hole drilled from the first side SD1 is a blind hole and is closed from its opened end through a lid 64; in another embodiment the hole is a thorough hole and is closed with counter posed lids 64.

The electric motors 8, 8a are situated outside the single-body 13, hydraulically insulated from the mixing chamber 14 and configured so as to reduce the interaxial distance d between the respective spindles 11, 11 a, preferably at a distance that is smaller than or equal to 50 mm. The fact that there are no reduction gears, i.e. the use of the claimed gate valve 3, 3a and the gasket 9, 9a, makes it possible to synergically solve the technical problem of reducing the dimensions of the mixer, by bringing the two electric motors much closer to each other.

According to a preferred embodiment, a portion 5p, 5p1 of the inlet 2, 2a projects from the seat of the single-body 13 and forms threaded mounts 5f, 5f1 for joining a pressure balancer which is included in the mixer group and interposed in the water path between flexible tube for supplying hot and cold water and the valve 3, 3a.

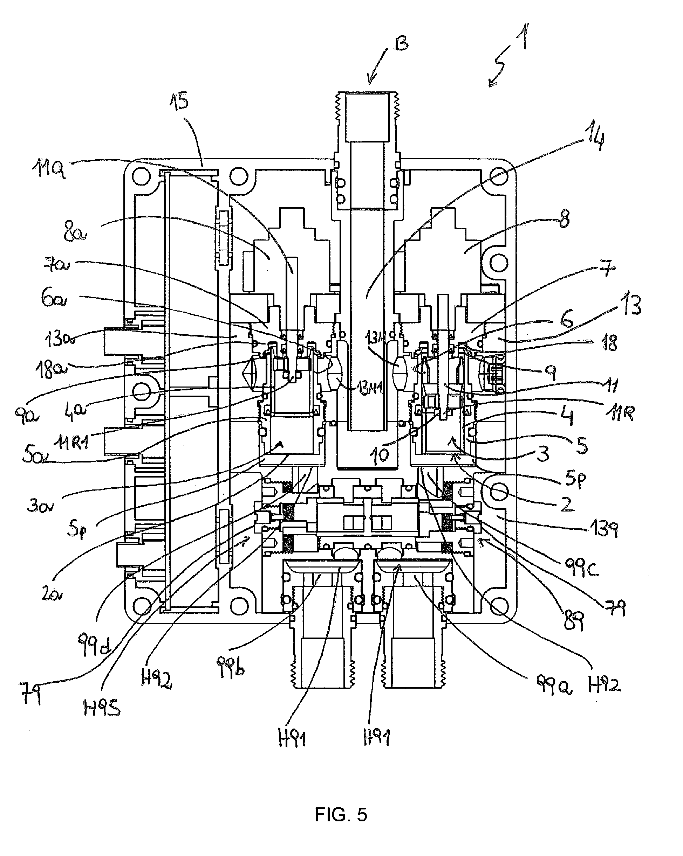

Hereafter the pressure balancer 89 is described in detail with reference to figure 5. The balancer is arranged upstream of the valves 3, 3a and comprises hot and cold water inlets 99a and 99b, in fluid communication with the flexible tubes supplying hot and cold water, and respective separate hot and cold water outlets 99c, 99d. The inlet 99a receives hot water at a preset temperature P1, the inlet 99b receives cold water at a preset pressure P2, for example greater than P1, and the outlets 99c, 99d separately release hot and cold water at the same pressure PBIL, substantially equivalent to the minimum value between P1 and P2.

The pressure balancer 89 is in a substantially cylindrical body 99 in which are the hot and cold water inlets 99a, 99b and the outlets 99c, 99d, diametrically opposite to the inlets. Arranged in the body 99 is a hollow cylinder 109 of a preset height HC, preferably externally provided with a central gasket 109c and with two intermediate concentric gaskets 109a, 109b, and it is inserted into the body 99 with all the sealing gaskets 109a, 109b, 109c on the internal surface of the body 99.

A piston 129 of the height HP<HC, comprising two axial cavities 129a, 129b separated by a central internal wall 139, an external central ring 149c and two opposite base rings 149a, 149b, is inserted into the hollow cylinder 109 in a sliding manner with all the rings 149 in contact with the internal surface of the hollow cylinder 109.

The surface of the cylinder is provided with holes 109f, 109f1 and the surface of the piston 129 is provided with holes 169f. In particular the central holes 109f of the hollow cylinder 109 between the central gasket 109c and the intermediate gaskets 109a, 109b are in fluid communication with the inlets 99a, 99b and the side holes 109f, arranged beyond the intermediate gaskets 109a, 109b, are in fluid communication with the outlets 99c, 99b of the body 99.

The mutual position of the holes 109f, 109f1 and of the holes 169f is regulated by the pressure P1, P2 of the inflowing water which moves the piston 129 inside the hollow cylinder 109, facilitating a greater flow of water through the inlet which receives water at a greater pressure. In particular, when the holes 169f and the holes 109f are positioned to increase the water inflow at a higher pressure, a base ring 109b is arranged to reduce a gap of the hole 169f through which the water flows towards a corresponding outlet 99d of the pressure balancer 89.

The body 99 of the pressure balancer is delimited by a plastic body 139 of the mixer group having inlets H91, H92 for hot and cold water; also the body 139 is manufactured starting from a single-block, substantially parallelepiped, which is drilled axially from a first side to delimit the water inlets H91 and outlets H92 and from another side, perpendicular to the first side, to delimit a through hole H95, forming a seat for the pressure balancer 89. The counter posed apertures of the through hole H95 are closed with respective lids 79 which define a limit switch for the piston 129 and the seat of the hollow cylinder 109. Holes 139o, preferably three for each opening, are also delimited within the body 139 to screw the lids 79. The outlets H92 of the body 139 are aligned with the outlets 99c and 9d of the pressure balancer, with the apertures HA1 of the body 13 and the inlets of the tubular body 5, 5a.

The precise regulation of the temperature in the mixer group according to the invention is achieved also through a system of sensors and an advanced adjustment of the valves, as described here below. An electronic card of the mixer group comprises a comparator between the mixed water temperature value TM, which is sensed from a sensor mounted inside the tube 62, near the output B, and a user selected temperature TP; the comparator receives at the input the preset temperature TP and the mixed temperature value TM, set by the user by means of a digital keyboard or similar interface, and actuates in advance the electric motors 8, 8a, to adjust the temperature according to the sensed and the desired temperature.

Moreover, it is foreseen for the mixer group to comprise a substantially box-shaped body 15 made from insulating material, comprising the electric motors and the bodies, the valves and the pressure balancer, equipped with a face F1 having respective openings A, A for the inlets, i.e. the inlets hydraulically connected to the pressure balance, an opposite face F2 equipped with a respective opening B for the outlet of mixer water, a lateral face F3 associated to a respective double bottom DF between which an electronic card is situated for driving the electric motors, , and a removable cover C, associated with a face F4, delimiting an hydraulically insulated seat within the mixer group. The face F3 comprises at least one hole O for receiving electrical connections for powering the electronic card and motors; through such hole or an additional hole of the box-shaped body 15, a wired connection towards a keypad, for example installed on the shower panel, is provided. Alternatively, the electronic card include a radio transmitter and is programmed to communicate wirelessly with a remote control device; in one aspect on the invention, the remote control device is a mobile phone, an I-pod, I-phone or the like, for driving remotely the mixer group.

Advantageously, the mixer group is simple to install since all the functional elements are enclosed in the boxed body 15 that can be easily fixed below the sink, hydraulically connected to the tubes for letting the water in and out, and supplied with electricity. The double bottom DF comprises at least one slot through which electric connections pass between the electronic card and, respectively, the power supply and the electric motors, and a layer of silicon resin for insulating the electronic card to protect it from humidity.

Advantageously, the mixer group according to the invention solves the technical problem since the valves 3, 3a are operative inside the inlets 2, 2a and are mounted directly onto the spindles 11, 11a of the respective electric motors 8, 8a, which are side by side and very close to one another. The increase and the reduction of the flow rate is carried out through the sliding of the hollow cylinder 4, 4a in the tubular body 5, 5a, respectively increasing or decreasing a port for the water to pass through the radial outlet 6, 6a, and the closure is carried out by deforming the tab of the gasket 9, 9a against the hollow cylinder 4, 4a, in the extension of such a seat. In other words, during the closure, the tab is no longer projecting in the seat but is squashed against the hollow cylinder. Advantageously, in such a position, the water present in the seat compresses the tab against the hollow cylinder, substantially acting upon the surface of the tab that is not in contact with the hollow cylinder, thus increasing the seal of the gasket and improving the closure. In such a way, flow rate and temperature adjustments can be carried out in a highly precise manner. Moreover, the valves, i.e. the respective hollow cylinders 4, 4a, the tubular bodies 5, 5a, and the gaskets do not undergo wearing and therefore the mixer does not require maintenance operations. Advantageously, the mixer group is so small that it can be counter behind a shower panel, without intervening on the wall of the shower; more particularly, the external size of the box-shaped body 15 is 35×130×155 mm.

## Claims

1. A thermostatic mixer group (1) for bathroom or kitchen comprising two valves (3, 3a) for regulating the flow of hot and cold water, **characterized by** the fact that:
each valve comprises a hollow cylinder (4, 4a), a tubular body (5, 5a) that forms a sliding seat of the hollow cylinder and comprises an axial inlet (2, 2a) and at least one radial outlet (6, 6a) for the water, an electric motor (8, 8a) for actuating the hollow cylinder, a lid for the end (7, 7a) opposite the inlet (2, 2a) of the tubular body, defining an extension (18, 18a) of said sliding seat, and an annular gasket (9, 9a) between the tubular body (5, 5a) and the lid (7, 7a),
comprising an elastically deformable tab (9v, 9v1) that projects in the extension (18, 18a) of said seat, in open flow conditions, or is deformed against the hollow cylinder (4, 4a), to close the flow, when said cylinder (4, 4a) engages with said extension (18, 18a),
said mixer group (1) comprising an outlet (B) of the mixed water, in fluid communication with the radial outlet (6, 6a) of said tubular body (5, 5a), and
control means to actuate the hollow cylinders in order to precisely maintain the temperature of said mixed water at a value preset by a user.

2. A mixer group (1) according to claim 1, **characterized by** comprising a pressure balancer (89) having inlets (99a, 99b) arranged to receive hot and cold water in predetermined pressures (P1, P2), and outlets (99c, 99d) of hot and cold water having a same pressure (PBIL), said outlets (99c, 99d) being connected to the axial inlets (2, 2a) of the tubular bodies (5, 5a) of said valves (3, 3a).

3. A mixer group according to claim 1 or 2 **characterised in that** said lid (7, 7a) comprises a through hole for the sliding of a shaft (11, 11a) of the electric motor, and **characterised in that** one operative end with a small diameter (11 R, 11R1) of the shaft is coupled with a perforated disc (10), preferably comprising a filter for the water, which engages a thickness (12) of said hollow cylinder (4, 4a).

4. A mixer group according to claim 3 **characterised in that** said perforated disc (10) is made from plastic material, preferably from POM, and is coupled with said end (11R, 11R1) with a predetermined axial clearance, preferably of 0.02 mm, and a predetermined radial clearance, preferably of 0.3 mm.

5. A mixer group according to claim 1-4 **characterised in that** said extension (18, 18a) has a length of 3 mm and said tab (9v, 9v1) has a thickness, at rest, of 0.5 mm and an inclination, at rest, of 45°, for an adjustment of minimal amounts of water that flow when the gasket (9, 9a) is not deformed against the hollow cylinder (4, 4a), preferably of amounts of between 40 and 30.000 ml/min.

6. A mixer group according to claim 1-5, **characterised in that** it comprises a single-body (13) having opposite seats for fixing the lid (7, 7a) and the tubular body (5, 5a), and a water outlet (13u, 13u1) in fluid communication with said radial outlet (6, 6a).

7. A mixer group according to claim 6 **characterised in that** a portion (5p, 5p1) of said inlet (2, 2a) projects from said fixing seat and forms threaded mounts (5f, 5f1) for fitting said pressure balancer (89).

8. A mixer group according to claim 1-7 **characterised in that** said tubular body (5, 5a) has a cross section, preferably of about 8 mm, and said electric motor (8, 8a) generates power that is at least sufficient to move said hollow cylinder (4, 4a) under mains pressure comprised between 0 bar and 15 bar, preferably a power comprised between 40 Newton and 100 Newton.

9. A mixer group according to claim 1-8 **characterised in that** said axial inlet (2, 2a) has an inner diameter of about 14 mm, and said hollow cylinder (4, 4a) has a section of 13.9 mm.

10. A mixer group according to claim 1-9 **characterised in that** said electric motors are linear actuation electric motors, arranged outside from the single-body (13), hydraulically insulated from a mixing chamber (14) wherein hot and cold from said radial outlets (6u, 6u1) is mixed and configured to reduce the interaxial distance (d) between the respective spindles (11, 11 a), preferably at a distance shorter than or equal to 50 mm.

11. A mixer group according to claim 1-10, **characterised in that** it comprises another single-body (139) delimiting inlets (H91) for hot and cold water from flexible tubes, outlets (H92) of hot and cold water with balanced pressure (PBIL), a through hole (H95), perpendicular to the inlet (H91) and outlets (H92) forming a seat for the pressure balancer (89).

12. A mixer group according to claim 11, **characterized in that** the counter posed apertures of the through hole (H95) are closed with respective lids (79) defining a limit switch for a piston (129) and a seat for a hollow cylinder (109) of the pressure balance (89), the piston being arranged to move in the hollow cylinder for balancing the pressure of the cold and hot water.

13. A mixer group according to claims 2, 6 and 11 **characterised in that** it comprises a substantially boxed body (15) made from insulating material, enclosing the body (13) with the valve (3a, 3), the body (139) with the respective pressure balancer (89), the boxed body being equipped with a face (F1) having respective openings (A, A) for the inlets of hot and cold waters supplied from the flexible tube, an opposite face (F2) equipped with a respective opening (B) for the outlet of mixer water, a lateral face (F3) associated to a respective double bottom (DF) between which an electronic card is arranged for driving the electric motors, and a removable cover (C), associated with a face (F4), delimiting an hydraulically insulated seat within the mixer group.

14. A mixer group according to claim 13 wherein said lateral face (F3) comprises at least one hole (O) for receiving electrical connections for powering the electronic card and electric motors, and a wired connection towards a keypad to be preferably installed on a shower panel.

15. A mixer group according to claim 13-14 wherein said electronic card includes a radio transmitter programmed to communicate wirelessly with a remote control device, preferably a mobile phone, an I-pod, an I-phone or the like, for driving remotely the mixer group.

16. A mixer group according to claim 13-15 **characterised in that** said boxed body (15) has dimensions which are smaller than or equal to 35mm x 130mm x 155mm.

17. A mixer group according to claim 1, including a comparator between the temperature value TM of the mixed water, sensed from a sensor associated with said outlet (B), and a user selected temperature TP, said control means actuating the electric motors (8, 8a) to adjust the temperature value TM to said selected temperature TP.

## Patentansprüche

1. Thermostatische Mischbatterie (1) für Bad oder Küche, mit zwei Ventilen (3, 3a) zum Einstellen des Stroms aus heißem und kaltem Wasser, **dadurch gekennzeichnet, dass**:
jedes Ventil einen Hohlzylinder (4, 4a), einen rohrförmigen Körper (5, 5a), der einen Gleitsitz des Hohlzylinders bildet und einen axialen Einlass (2, 2a) und mindestens einen radialen Auslass (6, 6a) für das Wasser hat, einen Elektromotor (8, 8a) zum Betätigen des Hohlzylinders, eine Kappe für das dem Einlass (2, 2a) des rohrförmigen Körpers entgegengesetzte Ende (7, 7a), die eine Verlängerung (18, 18a) des Gleitsitzes bildet, und eine ringförmige Dichtung (9, 9a) zwischen dem rohrförmigen Körper (5, 5a) und der Kappe (7, 7a) aufweist, umfassend eine elastisch verformbare Lasche (9v, 9v1), die unter Bedingungen mit offenem Fluss in die Verlängerung (18, 18a) des Sitzes ragt oder gegen den Hohlzylinder (4, 4a) verformt wird, um den Fluss zu stoppen, wenn der Hohlzylinder (4, 4a) in die Verlängerung (18, 18a) eingreift,
wobei die Mischbatterie (1) einen Auslass (B) des Mischwassers, der in Fluidverbindung mit dem radialen Auslass (6, 6a) des rohrförmigen Körpers (5, 5a) steht, und eine Steuereinrichtung aufweist, um die Hohlzylinder zu betätigen, um die Temperatur des Mischwassers genau auf einem durch einen Benutzer voreingestellten Wert zu halten.

2. Mischbatterie (1) nach Anspruch 1, **dadurch gekennzeichnet, dass** ein Druckausgleichselement (89) mit Einlässen (99a, 99b) enthalten ist, die angeordnet sind, um heißes und kaltes Wasser bei vorbestimmten Drücken (P1, P2) aufzunehmen, und mit Auslässen (99c, 99d) für heißes und kaltes Wasser mit demselben Druck (PBIL), wobei die Auslässe (99c, 99d) mit den axialen Einlässen (2, 2a) der rohrförmigen Körper (5, 5a) der Ventile (3, 3a) verbunden sind.

3. Mischbatterie nach Anspruch 1 oder 2, **dadurch gekennzeichnet, dass** die Kappe (7, 7a) eine Durchgangsöffnung für die Gleitbewegung einer Welle (11, 11a) des Elektromotors aufweist, und **dadurch gekennzeichnet, dass** ein operatives Ende mit einem kleinen Durchmesser (11R, 11R1) der Welle mit einer perforierten, vorzugsweise einen Filter für das Wasser aufweisenden Scheibe (10) verbunden ist, die an einer Dicke (12) des Hohlzylinders (4, 4a) angreift.

4. Mischbatterie nach Anspruch 3, **dadurch gekennzeichnet, dass** die perforierte Scheibe (10) aus Kunststoff hergestellt ist, vorzugsweise aus POM, und mit dem Ende (11R, 11R1) mit einem vorbestimmten axialen Spiel vorzugsweise In Höhe von 0,02 mm und einem vorbestimmten radialen Spiel vorzugsweise in Höhe von 0,3 mm verbunden ist.

5. Mischbatterie nach Anspruch 1 bis 4, **dadurch gekennzeichnet, dass** die Verlängerung (18, 18a) eine Länge von 3 mm hat und die Lasche (9v, 9v1) in Ruhelage eine Dicke von 0,5 mm und in Ruhelage eine Neigung von 45° aufweist, zur Einstellung kleinster Wassermengen, vorzugsweise von Mengen zwischen 40 und 30.000 ml/min, die fließen, wenn die Dichtung (9, 9a) nicht gegen den Hohlzylinder (4, 4a) verformt ist.

6. Mischbatterie nach Anspruch 1 bis 5, **dadurch gekennzeichnet, dass** sie einen Einzelkörper (13) umfasst, der entgegengesetzte Aufnahmen zum Fixieren der Kappe (7, 7a) und des rohrförmigen Körpers (5, 5a) sowie einen Wasserauslass (13u, 13u1) aufweist, der in Fluidverbindung mit dem radialen Auslass (6, 6a) steht.

7. Mischbatterie nach Anspruch 6, **dadurch gekennzeichnet, dass** ein Abschnitt (5p, 5p1) des Einlasses (2, 2a) über die Fixierungsaufnahme vorsteht und Gewindebefestigungen (5f, 5f1) zum Montieren des Druckausgleichselements (89) bildet.

8. Mischbatterie nach Anspruch 1 bis 7, **dadurch gekennzeichnet, dass** der rohrförmige Körper (5, 5a) einen Querschnitt vorzugsweise von ca. 8 mm hat und der Elektromotor (8, 8a) eine Kraft erzeugt, die zumindest ausreicht; um den Hohlzylinder (4, 4a) bei einem Hauptleltungsdruck zu bewegen, der zwischen 0 und 15 bar liegt, vorzugsweise eine Kraft zwischen 40 Newton und 100 Newton.

9. Mischbatterie nach Anspruch 1 bis 8, **dadurch gekennzeichnet, dass** der axiale Einlass (2, 2a) einen Innendurchmesser von ca. 14 mm hat und der Hohlzylinder (4, 4a) einen Querschnitt von 13,9 mm aufweist.

10. Mischbatterie nach Anspruch 1 bis 9, **dadurch gekennzeichnet, dass** es sich bei den Elektromotoren um Linearbetätigungs-Elektromotoren handelt, die außerhalb des Einzelkörpers (13) angeordnet, hydraulisch gegenüber einer Mischkammer (14) isoliert sind, in der heißes und kaltes Wasser aus den radialen Auslässen (6u, 6u1) gemischt wird, und so konfiguriert sind, dass der zwischenachsabstand (d) zwischen den entsprechenden Wellen (11, 11a) vermindert ist, vorzugsweise auf einen Abstand von kleiner oder gleich 50 mm.

11. Mischbatterie nach Anspruch 1 bis 10, **dadurch gekennzeichnet, dass** sie einen weiteren Einzelkörper (139) aufweist, der Einlässe (H91) für heißes und kaltes Wasser aus flexiblen Schläuchen, Auslässe (H92) für heißes und kaltes Wasser mit ausgeglichenem Druck (PBIL), und eine zu den Einlässen (H91) und Auslässen (H92) senkrechte Durchgangsöffnung (H95) begrenzt, die eine Aufnahme für das Druckausgleichselement (89) bildet.

12. Mischbatterie nach Anspruch 11, **dadurch gekennzeichnet, dass** die entgegengesetzt angeordneten Mündungen der Durchgangsöffnung (H95) mit entsprechenden Kappen (79) verschlossen sind, die einen Grenzschalter für einen Kolben (129) und eine Aufnahme für einen Hohlzylinder (109) des Druckausgleichselements (89) bilden, wobei der Kolben eingerichtet ist, sich zum Ausgleich des Drucks des kalten und heißen Wassers in dem Hohlzylinder zu bewegen.

13. Mischbatterie nach Anspruch 2, 6 und 11, **dadurch gekennzeichnet, dass** sie einen im Wesentlichen kastenförmigen Korpus (15) aufweist, der aus einem isolierenden Material besteht und den Einzelkörper (13) mit den Ventilen (3, 3a) sowie den Einzelkörper (139) mit dem entsprechenden Druckausgleichselement (89) umschließt, wobei der kastenförmige Korpus ausgestattet ist mit einer Wand (F1) mit entsprechenden Öffnungen (A, A) für die Einlässe für heißes und kaltes Wasser, das von den flexiblen Schläuchen zugeführt wird, einer gegenüberliegenden Wand (F2), die mit einer entsprechenden Öffnung (B) für den Auslass des Mischbatteriewassers ausgestattet Ist, einer Seitenwand (F3), die einem entsprechenden Doppelboden (DF) zugeordnet ist, in dem sich eine elektronische Platine zum Ansteuern der Elektromotoren befindet, und einer abnehmbaren Abdeckung (C), die einer Wand (F4) zugeordnet ist, welche eine hydraulisch isolierte Aufnahme innerhalb der Mischbatterie abgrenzt.

14. Mischbatterie nach Anspruch 13, wobei die Seitenwand (F3) mindestens ein Loch (O) zur Aufnahme von elektrischen Verbindungen zur Stromversorgung der elektronischen Platine und der Elektromotoren aufweist, sowie zur Aufnahme einer zu einer Tastatur führenden Drahtverbindung, welche Tastatur vorzugsweise an einem Duschbedlenfeld zu Installieren ist.

15. Mischbatterie nach Anspruch 13 bis 14, wobei die elektronische Platine einen Funksender umfasst, der dazu programmiert ist, drahtlos mit einer entfernten Einheit, vorzugsweise einem Mobiltelefon, einem iPod, einem iPhone oder dgl. zu kommunizieren, um eine Fernsteuerung der Mischbatterie zu bewerkstelligen.

16. Mischbatterie nach Anspruch 13 bis 15, **dadurch gekennzeichnet, dass** der kastenförmige Korpus (15) Abmessungen hat, die kleiner oder gleich 35 mm x 130 mm x 155 mm sind.

17. Mischbatterie nach Anspruch 1, umfassend eine Einheit zum Vergleichen zwischen dem Temperaturwert TM des Mischwassers, der von einem dem Auslass (B) zugeordneten Fühler erfasst wird, und einer vom Benutzer gewählten Temperatur TP, wobei die Steuereinrichtung die Elektromotoren (8, 8a) so betätigt, dass der Temperaturwert TM auf die gewählte Temperatur TP eingestellt wird.

## Revendications

1. Mitigeur thermostatique (1) pour salle de bains ou cuisine comprenant deux vannes (3, 3a) pour réguler l'écoulement de l'eau chaude et de l'eau froide, **caractérisé par le fait que** :
chaque vanne comprend un cylindre creux (4, 4a), un corps tubulaire (5, 5a) qui forme un siège de coulissement du cylindre creux et comporte un orifice d'entrée axial (2, 2a) et au moins un orifice de sortie radial (6, 6a) pour l'eau, un moteur électrique (8, 8a) pour actionner le cylindre creux, un couvercle pour l'extrémité (7, 7a) opposée à l'orifice d'entrée (2, 2a) du corps tubulaire, définissant un prolongement (18, 18a) dudit siège coulissant, et un joint d'étanchéité annulaire (9, 9a) entre le corps tubulaire (5, 5a) et le couvercle (7, 7a), comprenant une patte élastiquement déformable (9v, 9v1) qui fait saillie dans le prolongement (18, 18a) dudit siège, dans des conditions d'écoulement ouvert, ou est déformée contre le cylindre creux (4, 4a), pour fermer l'écoulement, lorsque ledit cylindre (4, 4a) vient en prise avec ledit prolongement (18, 18a),
ledit mitigeur (1) comprenant un orifice de sortie (B) de l'eau mélangée, en communication de fluide avec l'orifice de sortie radial (6, 6a) dudit corps tubulaire (5, 5a), et des moyens de commande pour actionner les cylindres creux afin de maintenir avec précision la température de ladite eau mélangée à une valeur prédéfinie par un utilisateur.

2. Mitigeur (1) selon la revendication 1, **caractérisé en ce qu'**il comprend un dispositif d'équilibrage de pression (89) ayant des orifices d'entrée (99a, 99b) agencés pour recevoir de l'eau chaude et froide à des pressions prédéterminées (P1, P2), et des orifices de sortie (99c, 99d) d'eau chaude et froide ayant une même pression (PBIL), lesdits orifices de sortie (99c, 99d) étant reliés aux orifices d'entrée axiaux (2, 2a) des corps tubulaires (5, 5a) desdites vannes (3, 3a).

3. Mitigeur selon la revendication 1 ou 2, **caractérisé en ce que** ledit couvercle (7, 7a) comprend un trou traversant pour le coulissement d'un arbre (11, 11a) du moteur électrique, et **caractérisé en ce qu'**une extrémité fonctionnelle ayant un petit diamètre (11R, 11R1) de l'arbre est couplée à un disque perforé (10), comprenant de préférence un filtre pour l'eau, qui s'engage dans une épaisseur (12) dudit cylindre creux (4, 4a).

4. Mitigeur selon la revendication 3, **caractérisé en ce que** ledit disque perforé (10) est réalisé en matière plastique, de préférence en POM, et est couplé à ladite extrémité (11R, 11R1) avec un jeu axial prédéterminé, de préférence de 0,02 mm, et un jeu radial prédéterminé, de préférence de 0,3 mm.

5. Mitigeur selon les revendications 1 à 4, **caractérisé en ce que** ledit prolongement (18, 18a) a une longueur de 3 mm et ladite languette (9v, 9V1) a une épaisseur, au repos, de 0,5 mm et une inclinaison, au repos, de 45°, pour un ajustement de quantités minimes d'eau qui s'écoulent lorsque le joint d'étanchéité (9, 9a) ne se déforme pas contre le cylindre creux (4, 4a), de préférence de quantités comprises entre 40 et 30,000 ml / min.

6. Mitigeur selon les revendications 1 à 5, **caractérisé en ce qu'**il comprend un corps unique (13) ayant des sièges opposés pour fixer le couvercle (7, 7a) et le corps tubulaire (5, 5a), et un orifice de sortie d'eau (13u , 13u1) en communication de fluide avec ladite sortie radiale (6, 6a).

7. Mitigeur selon la revendication 6, **caractérisé en ce qu'**une partie (5p, 5P1) dudit orifice d'entrée (2, 2a) fait saillie à partir dudit siège de fixation et forme des supports filetés (5f, 5f1) pour monter ledit dispositif d'équilibrage de pression (89).

8. Mitigeur selon les revendications 1 à 7, **caractérisé en ce que** ledit corps tubulaire (5, 5a) présente une section transversale, de préférence d'environ 8 mm, et ledit moteur électrique (8, 8a) génère une puissance qui est au moins suffisante pour déplacer ledit cylindre creux (4, 4a) sous pression du réseau comprise entre 0 bar et 15 bar, de préférence une puissance comprise entre 40 Newton et 100 Newton.

9. Mitigeur selon la revendication 1-8, **caractérisé en ce que** ledit orifice d'entrée axial (2, 2a) présente un diamètre intérieur d'environ 14 mm, et ledit cylindre creux (4, 4a) présente une section de 13,9 mm.

10. Mitigeur selon les revendications 1 à 9, **caractérisé en ce que** lesdits moteurs électriques sont des moteurs électriques linéaires d'actionnement, disposés à l'extérieur du corps unique (13), hydrauliquement isolés d'une chambre de mélange (14) dans laquelle de l'eau chaude et froide en provenance desdits orifices de sortie radiaux ( 6u, 6u1) est mélangée et configurés pour réduire l'entraxe (d) entre les broches respectives (11, 11a), de préférence à une distance inférieure ou égale à 50 mm.

11. Mitigeur selon les revendications 1 à 10, **caractérisé en ce qu'**il comprend un autre corps unique (139) délimitant des orifices d'entrée (H91) pour l'eau chaude et froide en provenance de tubes souples, des orifices de sortie (H92) d'eau chaude et froide ayant une pression équilibrée (PBIL ), un trou traversant (H95), perpendiculaire à l'orifice d'entrée (H91) et des orifices de sortie (H92) formant un siège pour le dispositif d'équilibrage de pression (89).

12. Mitigeur selon la revendication 11, **caractérisé en ce que** les ouvertures opposées du trou traversant (H95) sont fermées par des couvercles respectifs (79) définissant une fin de course d'un piston (129) et un siège pour un cylindre creux (109) du dispositif d'équilibrage de pression (89), le piston étant agencé pour se déplacer dans le cylindre creux afin d'équilibrer la pression de l'eau froide et chaude.

13. Mitigeur selon les revendications 2, 6 et 11, **caractérisé en ce qu'**il comprend un corps sensiblement en forme de boîte (15) constitué d'un matériau isolant, entourant le corps (13) avec la vanne (3a, 3), le corps (139) avec le dispositif d'équilibrage de pression respectif (89), le corps en forme de boîte étant muni d'une face (F1) ayant des ouvertures respectives (A, A) pour les arrivées d'eau chaude et froide en provenance du tube flexible, une face opposée (F2) munie d'une ouverture respective (B) pour l'orifice de sortie du mitigeur d'eau, une face latérale (F3) associée à un double fond respectif (DF) entre lequel une carte électronique est agencée pour entraîner les moteurs électriques, et un couvercle amovible (C), associé à une face ( F4), délimitant un siège hydrauliquement isolé au sein du mitigeur.

14. Mitigeur selon la revendication 13, dans lequel ladite face latérale (F3) comprend au moins un trou (O) pour recevoir des connexions électriques pour l'alimentation de la carte électronique et des moteurs électriques, et une connexion câblée vers un clavier à installer de préférence sur un panneau de douche.

15. Mitigeur selon les revendications 13 à 14, dans lequel ladite carte électronique comporte un émetteur radio programmé pour communiquer sans fil avec un dispositif de commande à distance, de préférence un téléphone mobile, un iPod, un iPhone, ou similaire, destiné à commander à distance le mitigeur.

16. Mitigeur selon les revendications 13 à 15, **caractérisé en ce que** ledit corps en forme de boîte (15) présente des dimensions qui sont inférieures ou égales à 35 mm x 130 mm x 155 mm.

17. Mitigeur selon la revendication 1, comprenant un comparateur entre la valeur de la température TM de l'eau mélangée, détectée par un capteur associé audit orifice de sortie (l3), et une température sélectionnée par l'utilisateur TP, lesdits moyens de commande actionnant les moteurs électriques (8, 8a) pour régler la valeur de température TM à ladite température sélectionnée TP.
